# EUROPEAN PATENT SPECIFICATION

(11) **EP 2 782 819 B1**
(45) Date of publication and mention of the grant of the patent: **18.05.2016**
(21) Application number: 12824851.5
(22) Date of filing: 23.11.2012
(51) Int. Cl.: B62J 27/00

(54) **IMPACT DETECTION DEVICE**
AUFSCHLAGSERKENNUNGSVORRICHTUNG
DISPOSITIF DE DÉTECTION D'IMPACT

(30) Priority: 24.11.2011 IT VR20110210
(43) Date of publication of application: 01.10.2014
(73) Proprietor: DAINESE S.p.A., Via dell'Artigianato 35 36060 Molvena (Vicenza) (IT)
(72) Inventor: PEREGO, Mattia, 21013 Gallarate VA (IT); PREVITALI, Cristian, 24040 Bonate Sopra BG (IT); SILANI, Enrico, 21026 Gavirate VA (IT)
(74) Representative: Manfrin, Marta
(86) International application number: PCT/IB2012/056668
(87) International publication number: WO 2013/076694

(56) References cited:
- US-A- 5 542 297
- US-A1- 2007 051 551
- SEBASTIAN BÜTEFISCH ET AL: "Three-Axes Monolithic Silicon Low-g Accelerometer", JOURNAL OF MICROELECTROMECHANICAL SYSTEMS, vol. 9, no. 4, 1 December 2000 (2000-12-01), pages 551-556, XP011034586, IEEE SERVICE CENTER, US ISSN: 1057-7157

## Description

The present disclosure relates in general to the detection of impacts in a vehicle, for example a wheeled vehicle, with particular but not exclusive reference to the sector of motorcycles. More particularly, the disclosure relates to the positioning of an impact detection device on a motorcycle, suitable for allowing activation of an automatic impact protection system.

In the sector of motorcycles and in particular motorcyclists' clothing, automatic impact protection systems, generally associated with jackets and one-piece suits, are increasingly common. The automatic protection systems generally comprise a plurality of air-bags which can be automatically activated in the event of an accident so as to protect the motorcyclist from the impact when falling and/or during a collision with other vehicles.

At present, automatic protection systems of the wireless type are increasingly common, activation of the air-bag being managed in these systems by a remote control unit connected to an impact detection device comprising one or more accelerometers. The accelerometers of the detection device are able to detect the accelerations to which the motorcycle is subject during travel and in particular the negative accelerations which affect the vehicle in the event of an impact. The electric signals generated by the accelerometers are sent to the control unit which, when a predetermined deceleration threshold is exceeded, activates the airbags.

The impact detection device is generally mounted on the motorcycle and in particular in the vicinity of the axle of the front wheel. This arrangement is considered to be the most suitable for detecting the accelerations acting on the motorcycle and in particular the negative accelerations in the event of an accident.

The aforementioned automatic systems are associated with motorcyclists' garments which are sold separately from the motorcycle and comprise both "internal" elements incorporated in the garments, for example the air-bags and a receiving control unit, and "external" elements to be mounted on the motorcycle, for example the impact detection device and a transmitting control unit.

The document US2007/0051551 represents the closest prior art to the invention as claimed and describes an assembly according to the preamble of claim 6. One of the main problems of automatic protection systems is that of their capacity to distinguish in real time the behaviour of the motorcycle during normal travel, including racing conditions, from the behaviour arising following an impact.

Another problem is that of fitting and adapting the "external" elements of an automatic protection system to motorcycle models which are different from each other and in particular that of positioning the impact detection device on the fork. If, in fact, the transmitting control unit may be hidden underneath the saddle or housed in the instrument panel of a motorcycle, the impact detection device is clearly visible on the fork of the motorcycle, forming a bulky object which may alter the appearance of the motorcycle.

There therefore exists the need to provide a method for positioning an impact detection device on a fork which alters as little as possible the appearance of the motorcycle, this forming one object of the present disclosure.

Another object of the present disclosure is to provide a positioning method which allows the accelerations acting on the motorcycle to be continuously detected and the impact situations to be determined as rapidly as possible.

Said objects are achieved with a positioning method, the main characteristic features of which are respectively specified in claim 1, while other characteristic features are specified in the remaining claims. Said objects are also achieved by an assembly consisting of the impact detection device and a fork according to claim 8.

A proposed solution forming the basis of the present disclosure consists in the use of a triaxial impact detection device, namely a device comprising accelerometers arranged along three axes orthogonal to each other. In this way it is possible, by means of suitable mathematical operations, to relate the acceleration values detected by each accelerometer to a group of three orthogonal reference axes of the motorcycle, in particular the three main axes relative to which the rolling, pitching and yawing movements are defined.

Another proposed solution forming the basis of the present disclosure is that of positioning the impact detection device on the rod-shaped members or arms of the fork so that the printed circuit boards on which the accelerometers are mounted extend parallel to the respective rod-shaped members.

The inventor has in fact noted that the printed circuit boards which allow detection of the accelerations in fact normally require printed circuit boards which have fairly large dimensions in plan view compared to those of the individual accelerometers. Moreover, in order to detect accelerations along three axes which are perpendicular to each other, it is necessary to arrange the accelerometers and the associated printed circuits perpendicularly with respect to each other, this increasing the overall dimensions of the detection device.

By arranging the printed circuit boards parallel to the rod-shaped members of the fork it is possible to minimize the dimensions of the impact detection device in particular in the transverse direction of the motorcycle, reducing the visual impact thereof and possible negative effect on the appearance.

According to one embodiment of the present disclosure, the detection device comprises a pair of printed circuit boards which are arranged at right angles and on which the accelerometers for the X and Y axes and for the Z axis are respectively mounted. The printed circuit boards on which the accelerometers are mounted are arranged inclined at 45 degrees with respect to a median plane of the wheel, thus forming an arrangement characterized by dimensions which are very small in the transverse direction.

According to a further embodiment of the present disclosure, the detection device comprises a single printed circuit board on which two conventional accelerometers for the X and Y axes, respectively, and a third accelerometer able to detect accelerations on a axis Z perpendicular to the axes X and Y are mounted.

According to a further embodiment of the present disclosure, the impact detection device comprises two groups of three accelerometers respectively intended to be mounted on two rod-shaped members of the fork, namely on the right-hand rod-shaped member and on the left-hand rod-shaped member, thus making it possible to obtain a detection system which is redundant and able to cancel out the accelerations which arise as a result of rotation of the steering about its axis.

The two groups of three accelerometers are placed in a mirror arrangement with respect to the longitudinal median plane of the wheel of the motorcycle and asymmetrically with respect to its axis of rotation. In this way it is possible to reduce the number of mathematical operations required to relate the acceleration values measured by the different accelerometers to the three main axes of the motorcycle, thus reducing to a minimum the time required by the calculation algorithm to determine impact situations.

Further advantages, characteristic features and modes of use of the subject of the present disclosure will become clear from the following detailed description of a number of preferred embodiments thereof, provided by way of a non-limiting example. It is clear, however, that each embodiment may have one or more of the advantages listed above; in any case it is not required that each embodiment should have simultaneously all the advantages listed.

It is also to be understood that the scope of the present disclosure embraces all the possible combinations of the embodiments mentioned above and those described with reference to the following detailed description.

Reference shall be made to the figures in the accompanying drawings in which:
- Figure 1 is a perspective view which shows in schematic form an impact detection device comprising a group of three accelerometers arranged along three orthogonal axes;
- Figure 2 shows in schematic form a motorcycle on the fork of which the impact detection device according to Figure 1 is mounted;
- Figure 3 is a top-plan view which shows in schematic form positioning of the impact detection device with respect to the fork of the motorcycle; and
- Figure 4 is a diagram which shows the arrangement of the reference axes of the accelerometers of the impact detection device with respect to the fork of the motorcycle.

With reference to the figures, a triaxial impact detection device 10 comprises in particular a group of three accelerometers 20, 30, 40 respectively arranged along three axes X, Y and Z perpendicular to each other and suitable for detecting accelerations respectively directed along these axes.

From a constructional point of view, in the embodiment shown in the figures, a first accelerator and a second accelerator are coplanar and may be mounted on a first printed circuit board, and a third accelerometer mounted on a second printed circuit board arranged perpendicularly with respect to the first printed circuit board.

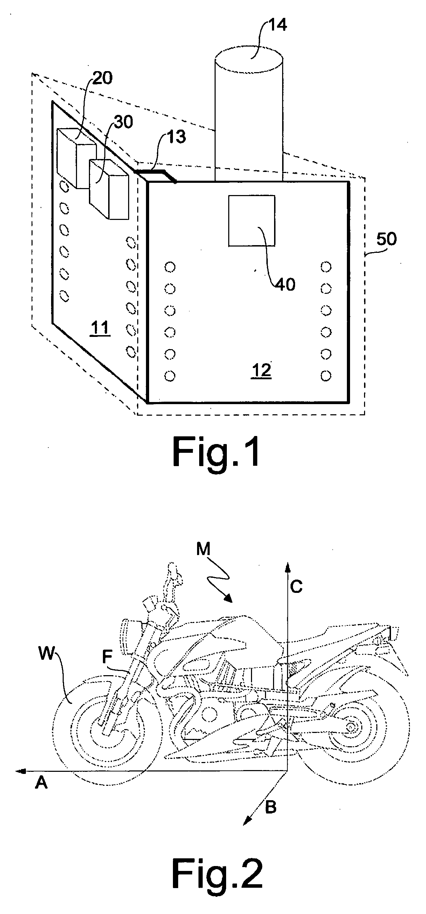

In the embodiment shown, the accelerometers 20, 30 arranged along the axes X and Y are coplanar and are both mounted on a first printed circuit board 11, while the accelerometer 40 arranged along the axis Z is mounted on a second printed circuit board 12 connected to the first printed circuit board 11 by means of a right-angled connector 13. The detection device 10 also comprises a cable 14 for connection to a transmitting unit (not shown) suitable for transmitting the electric signals emitted by the accelerometers 20, 30, 40 to a receiving unit (not shown) of an automatic protection system (not shown) comprising a plurality of air-bags, for example associated with a motorcyclist's jacket or suit. The group of three accelerometers 20, 30, 40 with the respective printed circuit boards 11, 12 are housed inside a container 50 shown schematically in broken lines in Figure 1.

It may be understood, however, that the accelerometers mounted on the printed circuit boards may be all of the same type and that the association of the electric signals generated by them with accelerations along the three axes X, Y, Z is merely conventional. For example, the two accelerometers 20, 30 mounted on the first printed circuit board 11 could be associated with axes X, Z and the accelerometer 40 mounted on the second printed circuit board could be associated with axis Y.

In the embodiment shown, the container 50 has a prismatic shape which is substantially triangular in plan view and reproduces the arrangement of the printed circuit boards 11, 12.

As shown in Figure 2, the detection device 10 is mounted on the fork F of a motor vehicle M in the vicinity of the axis of the wheel W, namely on the fork F which supports the wheel W.

According to the present disclosure, the detection device 10 is arranged so that the printed circuit boards 11, 12 are parallel to the axis of the fork F, namely are arranged in planes parallel to planes passing through the rod-shaped members Fsx, Fdx of the fork F. In this way it is possible to minimize the dimensions of the detection device 10 in the transverse direction, since the printed circuit boards, and likewise the components mounted thereon, do not occupy much space in the direction of the thickness, while they have generally much larger dimensions as regards the planes in which the components are mounted and in which the conduction paths are formed.

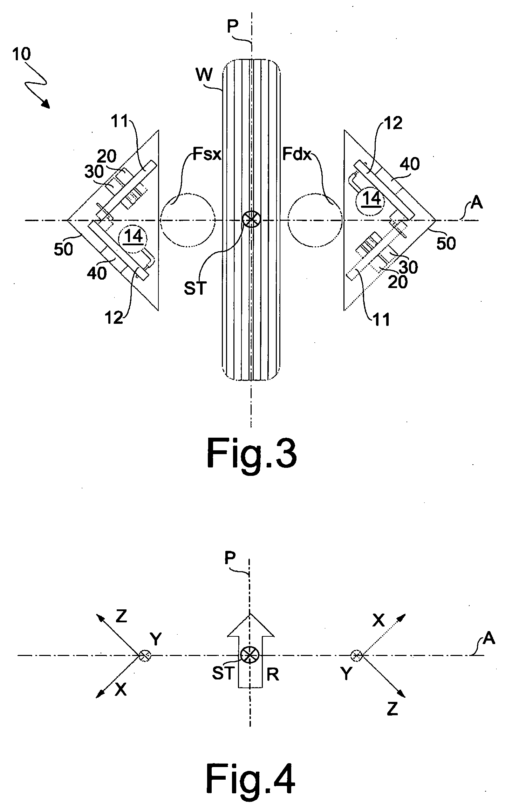

In the embodiment shown in Figure 3, the printed circuit boards 11, 12 are preferably arranged inclined at 45 degrees with respect to a longitudinal median plane P of the wheel W (i.e. the median plane P of the fork F) and symmetrically with respect to its axis A of rotation, which passes through the end zones of the rod-shaped members Fsx, Fdx of the fork F.

This configuration is able to minimize the dimensions of the detection device 10 transversely with respect to the motorcycle M since, considering the embodiment shown in Figure 1 which comprises a prismatic container 50 with a triangular base, the base of the triangle is parallel to the longitudinal median plane P of the wheel W and the inclined sides are directed towards the outside of the motorcycle M.

As shown in Figure 3, the detection device 10 preferably comprises two groups of three accelerometers 20, 30, 40 which are identical and respectively intended to be mounted on each of the rod-shaped members of the fork F of the motor vehicle M, for example the left-hand and right-hand stems Fsx, Fdx in a mirror arrangement with respect to a longitudinal median plane of the wheel W. As a result it is possible to obtain redundancy characteristics during detection of the accelerations.

As a result of mounting of the two groups of three accelerometers in a mirror arrangement it is possible to cancel out the accelerations which arise as a result of rotation of the wheel during steering of the motorcycle M, which would inevitably affect the general calculation of the accelerations.

With reference now to Figure 4, it can be noted that, owing to the mirror arrangement of the two groups of three accelerometers and the 45 degrees inclination of the printed circuit boards 11, 12, with respect to the longitudinal median plane P of the wheel W, the axes Y of each group of three accelerometers are oriented in the same direction and are parallel to the axes of the stems Fsx, Fdx of the fork F. The axes X and Z are perpendicular to each other and inclined by 45 degrees with respect to the longitudinal median plane P of the wheel W. The axes Y of each group of three accelerometers are in particular directed towards the ground.

With respect to the direction of forward movement of the motorcycle M, indicated in the figure by means of an arrow R, in the left-hand stem Fsx axis Z is inclined by 135 degrees with respect to the axis A of rotation of the wheel W, while the axis X is inclined by -135 degrees with respect to the axis A of rotation of the wheel W. In the right-hand stem Fdx, instead, the axis Z is inclined by -45 degrees with respect to the axis A rotation of the wheel W, while the axis X is inclined by 45 degrees with respect to the axis A of rotation of the wheel W. The groups of three accelerometers are therefore arranged asymmetrically with respect to the axis A of rotation of the wheel W of the motorcycle M.

Comparing Figure 4 with Figure 2, it can be understood that the arrangement of the accelerometers 20, 30, 40, and therefore of the axes X, Y, Z, arising from the configuration and the positioning of the detection device 10 described above, does not correspond to the three main axes or reference axes of the motorcycle M, which are indicated respectively by the letters A, B and C and which respectively represent the rolling, pitching and yawing axes.

In order to be able to perform calculations using the accelerations detected by the accelerometers 20, 30, 40, from a mathematical point of view conversion matrices must therefore be applied, "virtually" rotating the group of three accelerometers about their axes in successive steps so as to align them with the three main axes.

Still with reference to the embodiment shown in Figures 3 and 4, in both the groups of three accelerometers the sense of the axis Z is initially inverted.

For the group of three accelerometers associated with the left-hand stem Fsx of the fork F it is required to perform a first rotation through 45 degrees around the axis Y, a second rotation by -90 degrees around the axis Z which arises from the first rotation and finally a third rotation by 90 degrees around the axis Y which arises from the second rotation. The angle of the third rotation must furthermore be increased by the angle of inclination of the fork with respect to the ground, typically by about 26 degrees.

Similarly, for the group of three accelerometers associated with the right-hand stem Fdx of the fork F it is required to perform a first rotation by -135 degrees around the axis Y, a second rotation by -90 degrees around the axis Z which arises from the first rotation and finally a third rotation by 90 degrees around the axis Y which arises from the second rotation. In this case also, the angle of the third rotation must furthermore be increased by the angle of inclination of the fork with respect to the ground, typically by about 26 degrees.

As a result of the asymmetrical mirror arrangement (i.e. inverted by 180 degrees) of the two groups of three accelerometers, it is possible to minimize the virtual rotation operations needed to make them coincide with the three main axes of the motorcycle M, with the advantage of a greater rapidity of the control system during analysis of the data sent by the accelerometers in order to determine the impact situations and activate the air-bags of the protection system.

The embodiments of the present disclosure which are described and illustrated here constitute only examples which may be subject to numerous variations. For example, it is possible to form the detection device using a single printed circuit board for mounting two conventional accelerometers, for example those used in the embodiment described above, for the axes X, Y, and a third accelerometer which is coplanar with them, but able to detect accelerations on an axis Z perpendicular to the axes X, Y. In this way, the dimensions of the detection device 10 are further limited transversely with respect to the motorcycle M without complicating the calculation as regards the virtual rotations required to relate the two groups of three accelerometers to the three main axes of the motorcycle M. Moreover, it is possible to use the detection device according to the present disclosure also in combination with "external" elements such as air-bags and receiving control units arranged on the motorcycle or, more generally, on a wheeled vehicle, and not exclusively in the garments worn by the motorcyclist.

## Claims

1. Method for positioning an impact detection device (10) on a rod-shaped member (Fsx, Fdx) of a fork (F) of a vehicle (M), wherein said fork (F) supports a wheel (W) of the vehicle (M), wherein said detection device (10) comprises at least one group of three accelerometers (20, 30, 40) arranged on three axes (X, Y, Z) orthogonal to each other, wherein a first accelerometer and a second accelerometer (20, 30) of said group of three accelerometers (20, 30 40) are coplanar and mounted on a first printed circuit board (11) and a third accelerometer (40) is mounted on a second printed circuit board (12) perpendicularly with respect to said first printed circuit board (11), and wherein said first and second printed circuit boards (11, 12) are arranged in planes parallel to a longitudinal axis of the rod-shaped member (Fsx, Fdx) of the fork (F).

2. Method according to claim 1, wherein the first and second printed circuit boards (11, 12) are further inclined by an angle of 45 degrees relative to a longitudinal median plane (P) of the wheel (W) of the vehicle (M).

3. Method according to claim 1 or 2, wherein the first and second printed circuit boards (11, 12) are further arranged symmetrically with respect to a rotation axis (A) of the wheel (W).

4. Method according to any one of claims 1 to 3, wherein the detection device (10) comprises two groups of three accelerometers (20, 30, 40) and wherein one group of three accelerometers (20, 30, 40) is arranged on a right-hand rod-shaped member (Fdx) of the fork (F) of the vehicle (M) and one group of three accelerometers (20, 30, 40) is arranged on a left-hand rod-shaped member (Fsx) of the fork (F).

5. Method according to claim 4, wherein the two groups of accelerometers (20, 30, 40) are arranged rotated relative to each other by an angle of 180 degrees around a steering axis (ST) of the fork (F) with rotation being centred on the steering axis (ST).

6. Assembly comprising an impact detection device (10) and a fork (F) suitable for supporting a wheel (W) of a vehicle (M), said fork (F) comprising two rod-shaped members (Fsx, Fdx) and said detection device (10) comprising at least one group of three accelerometers (20, 30, 40) arranged on three axes (X, Y, Z) orthogonal to each other, **characterized in that** a first accelerometer and a second accelerometer (20, 30) are coplanar and mounted on a first printed circuit board (11) and a third accelerometer (40) is mounted on a second printed circuit board (12) perpendicularly with respect to said first circuit board, and wherein said first and second printed circuit boards (11, 12) are arranged in planes parallel to a longitudinal axis of at least one rod-shaped member (Fsx, Fdx) of the fork (F).

7. Assembly according to claim 6, wherein the first and second printed circuit boards (11, 12) are further inclined by an angle of 45 degrees relative to a longitudinal median plane (P) passing between the two rod-shaped members (Fsx, Fdx) of said fork (F).

8. Assembly according to claim 6 or 7, wherein the first and second printed circuit boards (11, 12) are further arranged symmetrically with respect to an axis (A) of rotation of the wheel (W) passing through end zones of the two rod-shaped members (Fsx, Fdx) of the fork (F).

9. Assembly according to any one of claims 6 to 8, wherein the detection device (10) comprises two groups of three accelerometers (20, 30, 40) and wherein one group of three accelerometers (20, 30, 40) is arranged on one of the two rod-shaped members (Fsx, Fdx) of the fork (F) and one group of three accelerometers (20, 30, 40) is arranged on the other of the two rod-shaped members (Fsx, Fdx) of the fork (F).

10. Assembly according to claim 9, wherein the two groups of three accelerometers (20, 30, 40) are arranged rotated relative to each other by an angle of 180 degrees around a steering axis of the fork (F) with rotation being centred on the steering axis (ST).

11. Assembly according to claim 10, wherein the two groups of three accelerometers (20, 30, 40) are placed in a mirror arrangement relative to a longitudinal median plane (P) passing between the two rod-shaped members (Fsx, Fdx) of said fork (F) and asymmetrically with respect to an axis (A) of rotation of the wheel (W) passing through end zones of the two rod-shaped members (Fsx, Fdx) of the fork (F)

12. Assembly according to any one of claims 6 to 11, further comprising a receiving control unit, suitable for receiving electrical signals from said detection device (10), and at least one air-bag operatively connected to said control unit, wherein said receiving unit and said at least one air-bag are associated with a garment and/or with a wheeled vehicle (M).

13. Wheeled vehicle (M) comprising an impact detection device (10), wherein said detection device (10) is arranged according to a positioning method of any one of claims 1 to 5, or wherein said detection device (10) comprises an assembly according to any one of claims 6 to 12.

## Patentansprüche

1. Verfahren zum Positionieren einer Aufpralldetektionsvorrichtung (10) auf einem stabförmigen Element (Fsx, Fdx) einer Gabel (F) eines Fahrzeugs (M), wobei die Gabel (F) ein Rad (W) des Fahrzeugs (M) trägt, wobei die Detektionsvorrichtung (10) zumindest eine Gruppe von drei Beschleunigungsmessern (20, 30, 40) umfasst, die an drei Achsen (X, Y, Z) orthogonal zueinander angeordnet sind, wobei ein erster Beschleunigungsmesser und ein zweiter Beschleunigungsmesser (20, 30) der Gruppe der drei Beschleunigungsmesser (20, 30, 40) komplanar und auf einer ersten Leiterplatte (11) montiert sind, und ein dritter Beschleunigungsmesser (40) auf einer zweiten Leiterplatte (12) senkrecht in Bezug auf die erste Leiterplatte (11) montiert ist, und wobei die erste und zweite Leiterplatte (11, 12) in Ebenen parallel zu einer Längsachse des stabförmigen Elements (Fsx, Fdx) der Gabel (F) angeordnet sind.

2. Verfahren gemäß Anspruch 1, wobei die erste und zweite Leiterplatte (11, 12) ferner in einem Winkel von 45° in Bezug auf eine longitudinale Medianebene (P) des Rades (W) des Fahrzeugs (M) geneigt sind.

3. Verfahren gemäß Anspruch 1 oder 2, wobei die erste und zweite Leiterplatte (11, 12) ferner symmetrisch in Bezug auf eine Rotationsachse (A) des Rades (W) angeordnet sind.

4. Verfahren gemäß einem der Ansprüche 1 bis 3, wobei die Detektionsvorrichtung (10) zwei Gruppen von drei Beschleunigungsmessern (20, 30, 40) umfasst, und wobei eine Gruppe von drei Beschleunigungsmessern (20, 30, 40) an einem rechten stabförmigen Element (Fdx) der Gabel (F) des Fahrzeugs (M) angeordnet ist und eine Gruppe von drei Beschleunigungsmessern (20, 30, 40) an einem linken stabförmigen Element (Fsx) der Gabel (F) angeordnet ist.

5. Verfahren gemäß Anspruch 4, wobei die beiden Gruppen von Beschleunigungsmessern (20, 30, 40) in Bezug zueinander um einen Winkel von 180° gedreht um eine Steuerungsachse (ST) der Gabel (F) herum angeordnet sind, wobei die Drehung auf die Steuerungsachse (ST) zentriert ist.

6. Aufbau, umfassend eine Aufpralldetektionsvorrichtung (10) und eine Gabel (F), die zum Tragen eines Rades (W) eines Fahrzeugs (M) geeignet ist, wobei die Gabel (F) zwei stabförmige Elemente (Fsx, Fdx) umfasst und die Detektionsvorrichtung (10) zumindest eine Gruppe von drei Beschleunigungsmessern (20, 30, 40) umfasst, die an drei Achsen (X, Y, Z) orthogonal zueinander angeordnet sind, **dadurch gekennzeichnet, dass** ein erster Beschleunigungsmesser und ein zweiter Beschleunigungsmesser (20, 30) komplanar und auf einer ersten Leiterplatte (11) montiert sind, und ein dritter Beschleunigungsmesser (40) auf einer zweiten Leiterplatte (12) senkrecht in Bezug auf die erste Leiterplatte montiert ist, und wobei die erste und zweite Leiterplatte (11, 12) in Ebenen angeordnet sind, die parallel sind zu einer Längsachse des stabförmigen Elements (Fsx, Fdx) der Gabel (F).

7. Aufbau gemäß Anspruch 6, wobei die erste und zweite Leiterplatte (11, 12) ferner um einen Winkel von 45° in Bezug auf eine longitudinale Medianebene (P), die zwischen die beiden stabförmigen Elemente (Fsx, Fdx) der Gabel (F) hindurchgeht, geneigt sind.

8. Aufbau gemäß Anspruch 6 oder 7, wobei die erste und zweite Leiterplatte (11, 12) ferner symmetrisch in Bezug auf die Rotationsachse (A) des Rades (W), die zwischen Endbereichen der beiden stabförmigen Elemente (Fsx, Fdx) der Gabel (F) hindurch geht, angeordnet sind.

9. Aufbau gemäß einem der Ansprüche 6 bis 8, wobei die Detektionsvorrichtung (10) zwei Gruppen von drei Beschleunigungsmessern (20, 30, 40) umfasst, und wobei eine Gruppe von drei Beschleunigungsmesser (20, 30, 40) an einem der beiden stabförmigen Elemente (Fsx, Fdx) der Gabel (F) angeordnet ist und eine Gruppe von drei Beschleunigungsmessern (20, 30, 40) an dem anderen der beiden stabförmigen Elemente (Fsx, Fdx) der Gabel (F) angeordnet ist.

10. Aufbau gemäß Anspruch 9, wobei die beiden Gruppen von drei Beschleunigungsmessern (20, 30, 40) in Bezug aufeinander um einen Winkel von 180° gedreht um eine Steuerungsachse der Gabel (F) angeordnet sind, wobei die Drehung auf die Steuerungsachse (ST) zentriert ist.

11. Aufbau gemäß Anspruch 10, wobei die beiden Gruppen von drei Beschleunigungsmessern (20, 30, 40) in einer Spiegelanordnung in Bezug auf die longitudinale Medianebene (P), die zwischen den beiden stabförmigen Elementen (Fsx, Fdx) der Gabel (F) hindurch geht, und asymmetrisch in Bezug auf eine Rotationsachse (A) des Rades (W), die durch Endbereiche der beiden stabförmigen Elemente (Fsx, Fdx) der Gabel (F) hindurch geht, platziert sind.

12. Aufbau gemäß einem der Ansprüche 6 bis 11, ferner umfassend: Eine Empfangssteuerungseinheit, die zum Empfangen elektrischer Signale von der Detektionsvorrichtung (10) geeignet ist, und zumindest einen Airbag, der mit der Steuerungseinheit wirkverbunden ist, wobei die Empfangseinheit und zumindest ein Airbag mit einer Bekleidung und/oder mit einem Radfahrzeug (M) verbunden sind.

13. Radfahrzeug (M) umfassend eine Aufpralldetektionsvorrichtung (10), wobei die Detektionsvorrichtung (10) gemäß einem Verfahren zum Positionieren gemäß einem der Ansprüche 1 bis 5 angeordnet ist, oder wobei die Detektionsvorrichtung (10) einen Aufbau gemäß einem der Ansprüche 6 bis 12 umfasst.

## Revendications

1. Procédé pour positionner un dispositif de détection d'impact (10) sur un élément en forme de tige (Fsx, Fdx) d'une fourche (F) d'un véhicule (M), dans lequel ladite fourche (F) supporte une roue (W) du véhicule (M), dans lequel ledit dispositif de détection (10) comprend au moins un groupe de trois accéléromètres (20, 30, 40) agencés sur trois axes (X, Y, Z) orthogonaux entre eux, dans lequel un premier accéléromètre et un deuxième accéléromètre (20, 30) dudit groupe de trois accéléromètres (20, 30, 40) sont coplanaires et montés sur une première carte de circuit imprimé (11) et un troisième accéléromètre (40) est monté sur une seconde carte de circuit imprimé (12) perpendiculairement par rapport à ladite première carte de circuit imprimé (11), et dans lequel lesdites première et seconde cartes de circuit imprimé (11, 12) sont agencée dans des plans parallèles à un axe longitudinal de l'élément en forme de tige (Fsx, Fdx) de la fourche (F).

2. Procédé selon la revendication 1, dans lequel lesdites première et seconde cartes de circuit imprimé (11, 12) sont en outre inclinées selon un angle de 45 degrés par rapport à un plan médian longitudinal (P) de la roue (W) du véhicule (M).

3. Procédé selon la revendication 1 ou 2, dans lequel lesdites première et seconde cartes de circuit imprimé (11, 12) sont en outre agencées symétriquement par rapport à un axe de rotation (A) de la roue (W).

4. Procédé selon l'une quelconque des revendications 1 à 3, dans lequel le dispositif de détection (10) comprend deux groupes de trois accéléromètres (20, 30, 40) et dans lequel un groupe de trois accéléromètres (20, 30, 40) est agencé sur un élément en forme de tige droit (Fdx) de la fourche (F) du véhicule (M) et un groupe de trois accéléromètres (20, 30, 40) est agencé sur un élément en forme de tige gauche (Fsx) de la fourche (F).

5. Procédé selon la revendication 4, dans lequel les deux groupes d'accéléromètres (20, 30, 40) sont agencés en rotation l'un par rapport à l'autre selon un angle de 180 degrés autour d'un axe de direction (ST) de la fourche (F) avec la rotation qui est centrée sur l'axe de direction (ST).

6. Ensemble comprenant un dispositif de détection d'impact (10) et une fourche (F) appropriée pour supporter une roue (W) d'un véhicule (M), ladite fourche (F) comprenant deux éléments en forme de tige (Fsx, Fdx) et ledit dispositif de détection (10) comprenant au moins un groupe de trois accéléromètres (20, 30, 40) agencés sur trois axes (X, Y, Z) orthogonaux entre eux, **caractérisé en ce qu'**un premier accéléromètre et un deuxième accéléromètre (20, 30) sont coplanaires et montés sur une première carte de circuit imprimé (11) et un troisième accéléromètre (40) est monté sur une seconde carte de circuit imprimé (12) perpendiculairement par rapport à ladite première carte de circuit imprimé, et dans lequel lesdites première et seconde cartes de circuit imprimé (11, 12) sont agencées dans des plans parallèles à un axe longitudinal d'au moins un élément en forme de tige (Fsx, Fdx) de la fourche (F).

7. Ensemble selon la revendication 6, dans lequel lesdites première et seconde cartes de circuit imprimé (11, 12) sont en outre inclinées selon un angle de 45 degrés par rapport à un plan médian longitudinal (P) passant entre les deux éléments en forme de tige (Fsx, Fdx) de ladite fourche (F).

8. Ensemble selon la revendication 6 ou 7, dans lequel lesdites première et seconde cartes de circuit imprimé (11, 12) sont en outre agencées symétriquement par rapport à un axe (A) de rotation de la roue (W) passant par des zones d'extrémité des deux éléments en forme de tige (Fsx, Fdx) de la fourche (F).

9. Ensemble selon l'une quelconque des revendications 6 à 8, dans lequel le dispositif de détection (10) comprend deux groupes de trois accéléromètres (20, 30, 40) et dans lequel un groupe de trois accéléromètres (20, 30, 40) est agencé sur l'un des deux éléments en forme de tige (Fsx, Fdx) de la fourche (F) et un groupe de trois accéléromètres (20, 30, 40) est agencé sur l'autre des deux éléments en forme de tige (Fsx, Fdx) de la fourche (F).

10. Ensemble selon la revendication 9, dans lequel les deux groupes de trois accéléromètres (20, 30, 40) sont agencés en rotation entre eux selon un angle de 180 degrés autour d'un axe de direction de la fourche (F) avec la rotation qui est centrée sur l'axe de direction (ST).

11. Ensemble selon la revendication 10, dans lequel les deux groupes de trois accéléromètres (20, 30, 40) sont placés en miroir par rapport à un plan médian longitudinal (P) passant entre les deux éléments en forme de tige (Fsx, Fdx) de ladite fourche (F) et de manière asymétrique par rapport à un axe (A) de rotation de la roue (W) passant par des zones d'extrémité des deux éléments en forme de tige (Fsx, Fdx) de la fourche (F).

12. Ensemble selon l'une quelconque des revendications 6 à 11, comprenant en outre une unité de commande de réception appropriée pour recevoir des signaux électriques dudit dispositif de détection (10), et au moins un coussin de sécurité gonflable raccordé de manière opérationnelle à ladite unité de commande, dans lequel ladite unité de réception et ledit au moins un coussin de sécurité gonflable sont associés avec un vêtement et/ou avec un véhicule à roues (M).

13. Véhicule à roues (M) comprenant un dispositif de détection d'impact (10), dans lequel ledit dispositif de détection (10) est agencé selon un procédé de positionnement selon l'une quelconque des revendications 1 à 5, ou dans lequel ledit dispositif de détection (10) comprend un ensemble selon l'une quelconque des revendications 6 à 12.
